# EUROPEAN PATENT APPLICATION

(11) **EP 4 790 091 A1**
(43) Date of publication of application: **12.08.2026**
(21) Application number: 25155948.0
(22) Date of filing: 05.02.2025
(51) Int. Cl.: C08L 23/04, C08L 23/10, C08L 23/12, C08F 2/00

(54) **POLYOLEFIN BLEND WITH A GOOD BALANCE STIFFNESS AND TOUGHNESS**

(71) Applicant: Borealis GmbH, 1020 Vienna (AT)
(72) Inventor: WANG, Jingbo, 4021 Linz (AT); GAHLEITNER, Markus, 4021 Linz (AT); BERNREITNER, Klaus, 4021 Linz (AT); LESKINEN, Pauli, 06850 Kulloo (FI)
(74) Representative: Kador & Partner Part mbB

(57) **Abstract**

The present invention relates to a polyolefin blend with a good balance between stiffness and toughness. The polyolefin blend has (i) a melt flow rate MFR₂ (ISO 1133, 230 °C, 2.16 kg) in the range of from 1.0 to 20.0 g/10 min; and (ii) a Charpy Notched Impact Strength (ISO 179-1eA, 23 °C) of more than 4.0 kJ/m²; and it comprises (A) 80 to 98 wt.-% of a recycled polyethylene-polypropylene composition (A) with specific characteristics; and (B) 2 to 20 wt.-% of a specifically selected polypropylene (B).

The present invention further relates to a method of preparing the polyolefin blend, an article comprising the same and the use of the polyolefin blend in automotive and/or packaging applications. Still further, the present invention is directed to the use of the polypropylene (B) for improving the balance between stiffness and toughness of a recycled polyethylene-polypropylene composition (A) by blending both components.

## Description

### Field of the invention

The present invention relates to a polyolefin blend with a good balance between stiffness and toughness, to a method of preparing the same, to articles comprising the polyolefin blend and to the use of the polyolefin blend in automotive and/or packaging applications.

### Background of the invention

Polyolefins, in particular polyethylene and polypropylene, are increasingly consumed in large amounts in a wide range of applications, including packaging for food and other goods, fibers, automotive components, wires and cables, and a great variety of manufactured articles.

Although recycling of plastic materials began in the mid-1990s by implementing collection systems, which allow more target-oriented collection and separation of plastic materials from other household waste materials, the reuse of plastic material originating from plastic waste is still limited. The so-called post-consumer recyclates (PCR) generally contain mixtures of different plastics and other contaminant materials of organic and inorganic nature. These contaminant materials usually deteriorate the mechanical properties of recycled polyolefins when compared to virgin, i.e., freshly produced and not yet used, polymers. Further, the effectiveness of additivation for recyclate-containing composition can be reduced due to the presence of contamination in the recyclate. However, good mechanical properties are important for the reuse of recycled polymers.

Methods have been developed to further purify the post-consumer recyclates (PCR). For example, WO 2018/046578 A1 discloses a process for the preparation of polyolefin recyclates from mixed-color polyolefin waste including packaging waste. Improvement of such recycling methods is ongoing. However, these methods are limited by the economic value of the recycled products, and the costs of the recycling methods should not greatly exceed the commercial value of the recycled products.

In order to provide recycled polymers with good mechanical properties, such polymers are blended with virgin polymers. For example, WO 2021/233818 A1 discloses polyethylene recyclate compositions comprising virgin high density polyethylenes (HDPE) suitable as jacketing materials that have acceptable ESCR performance. This disclosure uses for inventive examples a blend of 75 wt.-% of a virgin HDPE component for blending with a commercial source of a PCR polyethylene. However, it is generally desirable to enhance the amount of recycled polymers in a blend.

Thus, there is a great need for the reuse of recyclates, in particular, for the recycled material, wherein the recycling method thereof is relatively cost efficient. Thus, recycled polyolefin from a rather simple recycling process should be used in such products to limit the preparation costs and thus, to be commercially interesting. For example, recycled products containing both recycled polyethylene and recycled polypropylene can be produced by a simpler recycling process since the separation of polyethylene from polypropylene is not required.

The recycled products should comprise good mechanical properties. Blends with virgin polymers should contain high amounts of recycled polyolefins. Hence, these blends and their mechanical properties should be less sensitive to the contamination degree of the recycled polyolefins.

### Summary of the invention

The object underlying the present invention is to provide a polyolefin blend that addresses the above-described needs.

Accordingly, the present invention provides a polyolefin blend having
i) a melt flow rate MFR₂ (ISO 1133, 230 °C, 2.16 kg) in the range of from 1.0 to 20.0 g/10 min;
ii) a Charpy Notched Impact Strength (ISO 179-1eA, 23 °C) of more than 4.0 kJ/m²;
the polyolefin blend comprising
A) 80 to 98 wt.-%, based on the total weight of the polyolefin blend, of a recycled polyethylene-polypropylene composition (A), wherein the recycled polyethylene-polypropylene composition (A) has
   A-1) a melt flow rate MFR₂ (ISO 1133, 230 °C, 2.16 kg) in the range of from 1.0 to 20.0 g/10 min;
   A-2) an ethylene (C2) content (CRYSTEX QC method, as described herein), based on the total weight of the polyethylene-polypropylene composition (A), in the range of from 15 to 70 wt.-%;
   A-3) an ethylene content in the crystalline fraction (C2(CF)) (CRYSTEX QC method, as described herein), based on the total weight of the crystalline faction of the polyethylene-polypropylene composition (A), in the range of from 20 to 80 wt.-%;
   A-4) an ethylene content in the soluble fraction (C2(SF)) (CRYSTEX QC method, as described herein), based on the total weight of the soluble faction of the polyethylene-polypropylene composition (A), in the range of from 20 to 80 wt.-%;
   A-5) an intrinsic viscosity of the crystalline fraction (IV(CF)) (CRYSTEX QC method, as described herein) in the range of from 1.0 to 3.0 dl/g; and
   A-6) an intrinsic viscosity of the soluble fraction (IV(SF)) (CRYSTEX QC method, as described herein) in the range of from 0.5 to 3.5 dl/g; and
B) 2 to 20 wt.-%, based on the total weight of the polyolefin blend, of a polypropylene (B) having
   B-1) an intrinsic viscosity (IV) (CRYSTEX QC method, as described herein) in the range of from 5.0 to 15.0 dl/g;
   B-2) a content of soluble fraction (SF) (CRYSTEX QC method, as described herein), based on the total weight of the polypropylene (B), in the range of from 1.0 to 10.0 wt.-%;
   B-3) a weight-average molecular weight (Mw) (Gel Permeation Chromatography method, as described herein) in the range of from 0.5 x 10⁶ to 3.0 x 10⁶ g/mol; and
   B-4) a molecular weight distribution (MWD, Mw/Mn) (Gel Permeation Chromatography method, as described herein) in the range of from 2 to 25.

The present invention further provides a process of preparing the polyolefin blend, wherein the recycled polyethylene-polypropylene composition (A) and the polypropylene (B) are blended in an extruder in the optional presence of additives.

Moreover, the present invention relates to an article comprising the polyolefin blend, as well as to the use of the polyolefin blend in automotive and/or packaging applications.

Still further, the present invention relates to the use of the propylene (B) for improving the balance between stiffness and toughness of the recycled polyethylene-polypropylene composition (A) by blending both components.

The polyolefin blend according to the present invention is a blend of a recycled polyethylene-polypropylene composition (A) with a particularly selected polypropylene (B) that improves the properties of the recycled composition (A). It has been unexpectedly found that the addition of at least 2 wt.-% of the polypropylene with the recited parameters A-1 to A-4 could highly improve the mechanical properties of the recycled product in terms of the balance between stiffness to toughness. The prepared polyolefin blends are also characterized by both improved impact strength and improved flexural modulus, and these values are comparable with or even improved over those of virgin polyolefins.

As only a small amount of the polypropylene (B) is required to efficiently modify the recycled composition (A), the polyolefin blend may comprise an amount of up to about 98 wt.-% of the recycled composition (A). Accordingly, high amounts of the recycled products can be efficiently used in new applications, preferably as films or molded articles in automotive and/or packaging applications.

The requirements on purity and content of the recycled polyethylene-polypropylene composition (A) are not high, and mixtures of different polyethylenes and polypropylenes can be used, with an ethylene content in the range of about 15 to 70 wt.-%. Thus, no recycling processes are required for the separation of polyethylene from polypropylene in the material used as the source for composition (A).

### Detailed description of the invention

The present invention relates to a polyolefin blend comprising a recycled polyethylene-polypropylene composition (A) and a polypropylene (B), as defined above.

### Polyolefin blend

In the context of the present invention, the expression *"polyolefin blend"* refers to a composition comprising a recycled polyethylene-polypropylene composition (A) and a polypropylene (B), wherein the two components are mixed together. The polyolefin blend may comprise additional polymers, preferably polyolefin, components, as long as at least 2 wt.-% of the recycled polyethylene-polypropylene composition (A) and at least 80 wt.-% of the polypropylene (B) are present in the polyolefin blend. Preferably, the recycled polyethylene-polypropylene composition (A) and the polypropylene (B) are the only polymeric components of the polyolefin blend, together with possible masterbatches of additives. Usually, additives and optionally pigments are also present in the polyolefin blend that are specifically added during the preparation of the polyolefin blend. Further, additives and/or pigments originating from the components (A) and (B) may also be present. As the recycled polyethylene-polypropylene composition (A) usually comprises residual contamination from its first use, further components may be present in the polyolefin blend, as described herein below.

Generally, the expression *"polyolefin"* refers to a polymer of one or more alpha-olefins, usually polyethylene and/or polypropylene, the polyethylene and/or polypropylene optionally comprising one or more kinds of alpha-olefins having from 4 to 12 carbon atoms as comonomers. In the polyolefin blend according to the present invention, both polyethylene and polypropylene are present.

Generally, the expression *"polyethylene"* refers to a homopolymer of ethylene and a copolymer of ethylene and other comonomer units, such as alpha-olefins having from 3 to 12 carbon atoms. In the context of the present invention, a homopolymer of ethylene has 99 wt.-% and more of ethylene units, while a copolymer of ethylene has more than 50 wt.-% and less than 99 wt.-% of ethylene units, based on the total weight of the respective polymer of ethylene.

Respectively, the expression *"polypropylene"* refers to a homopolymer of propylene and a copolymer of propylene and other comonomer units, such as alpha-olefins having 2 and/or from 4 to 12 carbon atoms. In the context of the present invention, a homopolymer of propylene has 99 wt.-% and more of propylene units, while a copolymer of propylene has more than 50 wt.-% and less than 99 wt.-% of propylene units, based on the total weight of the respective polymer of propylene.

The content of comonomers can generally be determined by a quantitative ¹³C{¹H} NMR spectroscopy and/or by the CRYSTEX QC method as described herein. In the context of the present invention, the expression *"polyethylene"* or *"polypropylene"* also encompasses two or more of these polymers as well as these polymers comprising some contents of other polymers (this applies in particular for the recycled polymers).

According to the present invention, the polyolefin blend has a melt flow rate MFR₂ (ISO 1133:2022, 2.16 kg, 230 °C) in the range of from 1.0 to 20.0 g/10 min, preferably from 1.2 to 15.0 g/10 min, more preferably from 1.3 to 10.0 g/10 min and even more preferably from 1.5 to 7.0 g/10 min.

In some embodiments, the polyolefin blend has a melt flow rate MFR₂ (ISO 1133:2022, 2.16 kg, 230 °C) in the range of from 1.0 to 4.0 g/10 min.

The polyolefin blend according to the present invention is characterized by excellent mechanical properties in terms of an excellent stiffness/toughness balance.

According to the present invention, the polyolefin blend has a Charpy Notched Impact Strength (ISO 179-1eA, 23 °C) of more than 4.0 kJ/m², such as in the range of from 4.1 to 20.0 kJ/m², preferably from 5.0 to 17.0 kJ/m² and more preferably from 6.0 to 15.0 kJ/m², such as from more than 6.8 to 20.0 kJ/m², e.g. 6.9 to 13.0 kJ/m².

Preferably, the polyolefin blend has a Flexural Modulus (ISO 178, 23 °C) in the range of from 850 to 1200 MPa, preferably from 880 to 1150 MPa, more preferably from 900 to 110 MPa, such as from 915 to 1100. In some embodiments, the polyolefin blend has a Flexural Modulus (ISO 178, 23 °C) in the range of from 915 to 970 MPa.

In some embodiments, the polyolefin blend has a Charpy Notched Impact Strength (ISO 179-1eA, 23 °C) in the range of from more than 6.8 to 20.0 kJ/m² (e.g. 6.9 to 13.0 kJ/m²) and a Flexural Modulus (ISO 178, 23 °C) in the range of from 915 to 970 MPa.

Preferably, the polyolefin blend has a ratio of Charpy Notched Impact Strength (ISO 179-1eA, 23 °C) and Flexural Modulus (ISO 178, 23 °C) in the range of from 7.6*10⁻³ to 15*10⁻³ kJ/m²/MPa.

According to the present invention, the polyolefin blend comprises from 80 to 98 wt.-%, preferably from 82 to 97 wt.-% and more preferably from 85 to 96 wt.-%, of the recycled polyethylene-polypropylene composition (A), and from 2 to 20 wt.-%, preferably from 3 to 18 wt.-% and more preferably from 4 to 15 wt.-% of the polypropylene (B), both being based on the total weight of the polyolefin blend.

The polyolefin blend may comprise additives. Accordingly, a total amount of additives may be present in the polyolefin blend in the range of from 0.0 to 5.0 wt.- %, preferably from 0.01 to 3.00 wt.-% and more preferably from 0.10 to 2.00 wt.-%, based on the total weight of the polyolefin blend. These additives may be added during the preparation of the polyolefin blend and/or may originate from the components (A) and (B).

Suitable additives are common additives for utilization with polyolefins, such as stabilizers (e.g. antioxidant agents, UV-stabilizers, metal deactivators, etc.), antistatic agents, and utilization agents (such as processing aid agents).

In some embodiments, the polyolefin blend according to the present invention comprises at least one antioxidant. Suitable antioxidants may be selected from phenolic antioxidants, phosphorous antioxidants and combinations thereof. Preferably, the polyolefin blend comprises at least one phenolic antioxidant and at least one phosphorous antioxidant.

The polyolefin blend may comprise pigments, such as carbon black, usually in an amount in the range of from 0.0 to 5.0 wt.-%, preferably from 0.01 to 3.00 wt.-% and more preferably from 0.10 to 2.00 wt.-%, based on the total weight of the polyolefin blend. The pigments may be added during the preparation of the polyolefin blend and/or may originate from the components (A) and (B), preferably the pigments originate from the recycled polyethylene-polypropylene composition (A) and/or are freshly added to the polyolefin blend.

In some embodiments, the polyolefin blend according to the present invention comprises, or consists of, from 80 to 98 wt.-% of the recycled polyethylene-polypropylene composition (A), from 2 to 20 wt.-% of the polypropylene (B) and from 0.01 to 3.00 wt.-% of additives, selected from antioxidant agents, UV-stabilizers, antistatic agents, metal deactivators and/or processing aid agents, all based on the total weight of the polyolefin blend.

In some particular embodiments, the polyolefin blend according to the present invention comprises, or consists of, from 85 to 96 wt.-% of the recycled polyethylene-polypropylene composition (A), from 4 to 15 wt.-% of the polypropylene (B) and from 0.10 to 2.00 wt.-% of additives, preferably at least antioxidant agents, all based on the total weight of the polyolefin blend.

### Recycled polyethylene-polypropylene composition (A)

According to the present invention, the polyolefin blend comprises a recycled polyethylene-polypropylene composition (A).

In the context of the present invention, the expression *"recycled polyethylene-polypropylene composition"* refers to a material, such as a blend, of recycled polyethylene and recycled polypropylene. Usually, such material is prepared predominantly (i.e., from 75 wt.-% to 100 wt.-%, or even from 95 wt.-% to 100 wt.- %, for example 99 wt.-%) from raw materials obtained from recovered sources, such as products obtained from mechanical or chemical recycling processes, particularly from mechanical recycling of plastic waste, such as post-consumer waste. Recycled polyethylene-polypropylene compositions are already commercially available. Generally, the expressions *"polyethylene"* and *"polypropylene"* are to be understood as defined above and encompass the respective homopolymers and copolymers as well as mixtures of the respective homo- and copolymers.

In the context of the present invention, the expression *"virgin polyolefin"* refers to newly produced polyolefin materials prior to their first use, which have not yet been recycled. Similarly, *"virgin polyethylene"* and *"virgin polypropylene"* are freshly prepared polyethylene or polypropylene polymers, respectively.

Recycled polyethylene and polypropylene materials are considered to be structurally different from virgin polyethylene and polypropylene materials, respectively, in that the overall variance of the composition is broader than in the case of virgin materials. For example, the molecular weight distribution of recycled polyethylene materials may be broader than that of virgin polyethylene materials. Alternatively or in addition, recycled polyethylene materials may be characterized in that they comprise higher amounts of contamination, such as organic contamination (e.g., organic additives, residual amounts of polymeric materials of different polymer classes, as well as wood and paper) and/or inorganic contamination (e.g., metal contaminants, residual fillers or pigments, halogens, sulfur). Often the presence of limonene even in a small amount (few ppm, such as 1 ppm or more) is indicative of a recycled polyolefin.

In some embodiments, the recycled polyethylene-polypropylene composition (A) comprises, based on the total weight of the recycled polyethylene-polypropylene composition (A), one or more of
a) from 0.1 to 100 ppm, preferably from 0.1 to 50 ppm, more preferably from 0.1 to 20 ppm, most preferably from 0.1 to 5 ppm, of limonene (HS-SPME-GC-MS, as described herein);
b) from 0.1 to 100 ppm, preferably from 0.1 to 50 ppm, more preferably from 0.1 to 20 ppm, most preferably from 0.1 to 5 ppm, of fatty acids (HS-SPME-GC-MS, as described herein);
c) from 0.1 to 10 wt.-%, preferably from 0.1 to 5.0 wt.-%, more preferably from 0.1 to 4.0 wt.-%, of non-polyolefin polymers; in particular, from 0.1 to 3.0 wt.- % of polystyrene and/or from 0.1 to 3.0 wt.-% of polyamide (FTIR spectroscopy, as described herein);
d) from 0.1 to 10.0 wt.-%, preferably from 0.1 to 5.0 wt.-%, more preferably from 0.1 to 3.0 wt.-%, of other components, selected from talc, chalk, carbon, calcium stearate, titanium dioxide, pigments, metals, glass, paper, wood, and combinations thereof, determined as described below (the talc and chalk contents being preferably determined by TGA, as described herein); and
e) from 0.1 to 5.0 wt.-%, preferably from 0.3 to 2.4 wt.-%, of a residual ash content (TGA, in line with ISO 3451-1 (1997) as described herein).

In some embodiments, the recycled polyethylene-polypropylene composition (A) comprises, based on the total weight of the recycled polyethylene-polypropylene composition (A), one or more, preferably all, of
- from 0.3 to 5.0 wt.-%, such as from 1.0 to 2.4 wt.-%, of a residual ash content (TGA, in line with ISO 3451-1 (1997) as described herein);
- from 0.1 to 3.0 wt.-%, such as from 0.8 to 1.6 wt.-%, of polyamide (FTIR spectroscopy, as described herein);
- from 0.1 to 3.0 wt.-%, such as from 0.7 to 2.4 wt.-%, of polystyrene (FTIR spectroscopy, as described herein); and/or
- from 0 to 1.0 wt.-%, such as from 0 to 0.3 wt.-%, of ethylene-vinylacetate (FTIR spectroscopy, as described herein).

According to the present invention, the recycled polyethylene-polypropylene composition (A) is characterized by A-1) a melt flow rate MFR₂ (ISO 1133, 230 °C, 2.16 kg) in the range of from 1.0 to 20.0 g/10 min, preferably from 2.0 to 15.0 g/10 min, more preferably from 3.0 to 10.0 g/10 min and most preferably from 4.0 to 8.0 g/10 min.

According to the present invention, the recycled polyethylene-polypropylene composition (A) is also characterized by the following ethylene contents and intrinsic viscosities in the respective fractions as determined by the CRYSTEX QC method described herein, of:
A-2) an ethylene (C2) content, based on the total weight of the polyethylene-polypropylene composition (A), in the range of from 15 to 70 wt.-%, preferably from 20 to 65 wt.-%, more preferably from 25 to 60 wt.-% and most preferably from 30 to 55 wt.-%;
A-3) an ethylene content in the crystalline fraction (C2(CF)), based on the total weight of the crystalline faction of the polyethylene-polypropylene composition (A), in the range of from 20 to 80 wt.-%, preferably from 25 to 75 wt.-%, more preferably from 30 to 70 wt.-% and most preferably from 35 to 65 wt.-%;
A-4) an ethylene content in the soluble fraction (C2(SF)), based on the total weight of the soluble faction of the polyethylene-polypropylene composition (A), in the range of from 20 to 80 wt.-%, preferably from 25 to 75 wt.-%, more preferably from 30 to 70 wt.-% and most preferably from 35 to 65 wt.-%;
A-5) an intrinsic viscosity of the crystalline fraction (IV(CF)) in the range of from 1.0 to 3.0 dl/g, preferably from 1.2 to 2.8 dl/g, more preferably from1.4 to 2.6 dl/g and most preferably from 1.6 to 2.6 dl/g; and
A-6) an intrinsic viscosity of the soluble fraction (IV(SF)) in the range of from 0.5 to 3.5 dl/g, preferably from 0.6 to 3.0 dl/g, more preferably from 0.7 to 2.5 dl/g and most preferably from 0.8 to 2.0 dl/g.

Preferably, the recycled polyethylene-polypropylene composition (A) has, as determined by the CRYSTEX QC method described herein:
- a content of soluble fraction (SF), in the range of from 1 to 20 wt.-%, more preferably from 2 to 15 wt.-%, even more preferably from 4 to 12 wt.-% and most preferably from 6 to 10 wt.-%; and/or
- an intrinsic viscosity (IV) in the range of from 1.0 to 3.0 dl/g, preferably from 1.2 to 2.8 dl/g, more preferably from 1.4 to 2.6 dl/g and most preferably from 1.6 to 2.6 dl/g.

Preferably, the recycled polyethylene-polypropylene composition (A) has a crystallization temperature (T_{c1}), related to the polypropylene fraction, and a crystallization temperature (T_{c2}) related to the polyethylene fraction, as determined by Differential Scanning Calorimetry (DSC) method described herein, of:
- a crystallization temperature (T_{c1}) in the range of from 110 to 130 °C, more preferably from 115 to 126 °C and most preferably from 118 to 124 °C; and
- a crystallization temperature (T_{c2}) in the range of from 105 to 122 °C, more preferably from 111 to 119 °C and most preferably from 113 to 117 °C.

Often, the recycled polyethylene-polypropylene composition (A) has a Charpy Notched Impact Strength (ISO 179-1eA, 23 °C) below 7.0 kJ/m², such as in the range of from 3.0 to 6.5 kJ/m².

The properties described herein have been found particularly advantageous for the recycled polyethylene-polypropylene composition (A) used in the polyolefin blend according to the present invention.

Recycled polyethylene-polypropylene compositions as described herein are commercially available, e.g., such as the products under the trade name Dipolen^{™} from the Borealis Group.

### Polypropylene (B)

According to the present invention, the polyolefin blend comprises a polypropylene (B).

Preferably, the polypropylene (B) is a virgin, i.e., newly produced and not yet used polypropylene, and not a recycled polypropylene.

Generally, the polypropylene (B) can be a homopolymer of propylene or any copolymer of propylene, as long as it has the required properties B-1 to B-4. Preferably, the polypropylene (B) is a homopolymer of propylene or a copolymer of propylene and ethylene, more preferably a homopolymer of propylene or a random copolymer of propylene and ethylene with a content of comonomer units derived from ethylene (CRYSTEX QC method, as described herein) in the range of from 0.1 to 10.0 wt.-%, preferably from 0.2 to 7.0 wt.-%, more preferably from 0.5 to 5.0 wt.-% and most preferably from 1.0 to 4.0 wt.-%, based on the total weight of the polypropylene (B). The expression *"random copolymer"* describes a polymer with randomly distributed comonomer units in the copolymer, presently randomly distributed units derived from ethylene.

The polypropylene (B) can be a unimodal or multimodal polypropylene. Modality denotes here the number of different fractions contained in the polymer, which have been produced under different polymerization conditions resulting in different (weight average) molecular weights and/or molecular weight distributions for the fractions and/or different comonomer contents. Preferably, the polypropylene (B) is a unimodal polypropylene, more preferably a unimodal propylene homopolymer or a unimodal random copolymer of propylene and ethylene and most preferably a unimodal propylene homopolymer or a unimodal random copolymer of propylene and ethylene with a content of comonomer units derived from ethylene (CRYSTEX QC method, as described herein) in the range of from 0.1 to 10.0 wt.-%.

Preferably, the polypropylene (B) is prepared using a Ziegler-Natta catalyst.

This Ziegler-Natta catalyst can be any stereo-specific Ziegler-Natta catalyst for propylene polymerization, which preferably is capable of catalyzing the polymerization and copolymerization of propylene and comonomers at a pressure in the range of from 500 to 10000 kPa, in particular from 2500 to 8000 kPa, and at a temperature in the range of from 40 to 110 °C, in particular from 60 to 110 °C.

Preferably, the Ziegler-Natta catalyst comprises a titanium compound (TC), a magnesium compound (MC) and an internal donor (ID), wherein said internal donor (ID) may comprise a succinate, a diether, or mixtures thereof. Optionally, a co-catalyst (Co), and/or an external donor (ED) may also be used in the polymerization process.

More preferably, the Ziegler-Natta catalyst comprises a high-yield Ziegler-Natta type catalyst including an internal donor component. Such high-yield Ziegler-Natta catalysts can comprise a succinate, a diether, etc., or mixtures thereof as internal donor (ID), and they are commercially available, e.g., from LyondellBasell under the Avant ZN trade name.

Examples of the Avant ZN series are Avant ZN126 and Avant ZN168. Avant ZN126 is a Ziegler-Natta catalyst with 3.5 wt.-% of titanium and a diether compound as internal electron donor. Avant ZN168 is a Ziegler-Natta catalyst with 2.6 wt.-% titanium and a succinate compound as internal electron donor. A further example of the Avant ZN series is the catalyst ZN180M.

According to the present invention, the polypropylene (B) is characterized by the following parameters as determined by the CRYSTEX QC method described herein, of:
B-1) an intrinsic viscosity (IV) in the range of from 5.0 to 15.0 dl/g, preferably from 5.2 to 14.0 dl/g, more preferably from 5.5 to 13.0 dl/g and most preferably from 6.0 to 11.0 dl/g; and
B-2) a content of soluble fraction (SF), based on the total weight of the polypropylene (B), in the range of from 1.0 to 10.0 wt.-%, preferably from 1.2 to 9.0 wt.-%, more preferably from 1.5 to 8.0 wt.-% and most preferably from 2.0 to 7.0 wt.-%.

According to the present invention, the polypropylene (B) is also characterized by the following parameters as determined by the Gel Permeation Chromatography (GPC) method described herein, of:
B-3) a weight-average molecular weight (M_{w}) in the range of from 0.5 x 10⁶ to 3.0 x 10⁶ g/mol, preferably from 0.7 x 10⁶ to 2.9 x 10⁶ g/mol, more preferably from 1.0 x 10⁶ to 2.8 x 10⁶ g/mol and most preferably from 1.2 x 10⁶ to 2.5 x 10⁶ g/mol; and
B-4) a molecular weight distribution (MWD, M_{w}/Mₙ) in the range of from 2 to 25, preferably from 3 to 24, preferably from 4 to 24 and most preferably from 6 to 23.

Preferably, the polypropylene (B) has a melt flow rate (MFR₂) (ISO 1133, 230 °C, 2.16 kg) in the range of from 0.01 to 1.50 g/10 min, more preferably from 0.01 to 1.20 g/10 min, even more preferably from 0.02 to 1.00 g/10 min and most preferably from 0.02 to 0.50 g/10 min.

Preferably, the polypropylene (B) has the following parameters, as determined by Differential Scanning Calorimetry (DSC) method described herein, of:
- a crystallization temperature (T_{c}) in the range of from 100 to 125 °C, more preferably from 102 to 120 °C and most preferably from 104 to 116 °C; and/or
- a melting temperature (Tₘ) in the range of from 135 to 170 °C, more preferably from 140 to 168 °C and most preferably from 142 to 166 °C.

In some embodiments, the polypropylene (B) is a homopolymer, preferably a unimodal homopolymer, of propylene having:
B-1) an intrinsic viscosity (IV) in the range of from 5.0 to 10.0 dl/g, preferably from 5.2 to 9.0 dl/g, more preferably from 5.5 to 8.0 dl/g and most preferably from 6.0 to 7.0 dl/g;
B-2) a content of soluble fraction (SF), based on the total weight of the polypropylene (B), in the range of from 1.0 to 5.0 wt.-%, preferably from 1.2 to 4.0 wt.-%, more preferably from 1.5 to 3.5 wt.-% and most preferably from 2.0 to 3.0 wt.-%;
B-3) a weight-average molecular weight (M_{w}) in the range of from 0.5 x 10⁶ to 2.2 x 10⁶ g/mol, preferably from 0.7 x 10⁶ to 2.0 x 10⁶ g/mol, more preferably from 1.0 x 10⁶ to 1.9 x 10⁶ g/mol and most preferably from 1.2 x 10⁶ to 1.8 x 10⁶ g/mol; and
B-4) a molecular weight distribution (MWD, M_{w}/Mₙ) in the range of from 15 to 25, preferably from 17 to 24, more preferably from 20 to 24 and most preferably from 21 to 23.

In these embodiments of the homopolymer of propylene, the polypropylene (B) preferably has:
- a melt flow rate (MFR₂) (ISO 1133, 230 °C, 2.16 kg) in the range of from 0.10 to 1.50 g/10 min, more preferably from 0.15 to 1.20 g/10 min, even more preferably from 0.18 to 1.00 g/10 min and most preferably from 0.20 to 0.50 g/10 min; and/or
- a crystallization temperature (T_{c}) in the range of from 105 to 125 °C, more preferably from 110 to 120 °C and most preferably from 112 to 116 °C; and/or
- a melting temperature (Tₘ) in the range of from 150 to 170 °C, more preferably from 155 to 168 °C and most preferably from 160 to 166 °C.

In some embodiments, the polypropylene (B) is a random copolymer, preferably a unimodal random copolymer, of propylene and ethylene with a content of comonomer units derived from ethylene in the range of from 0.1 to 10.0 wt.-%, preferably from 0.2 to 7.0 wt.-%, more preferably from 0.5 to 5.0 wt.-% and most preferably from 1.0 to 4.0 wt.-%, based on the total weight of the polypropylene (B), having:
B-1) an intrinsic viscosity (IV) in the range of from 7.0 to 15.0 dl/g, preferably from 8.0 to 14.0 dl/g, more preferably from 9.0 to 13.0 dl/g and most preferably from 10.0 to 11.0 dl/g;
B-2) a content of soluble fraction (SF), based on the total weight of the polypropylene (B), in the range of from 4.0 to 10.0 wt.-%, preferably from 4.5 to 9.0 wt.-%, more preferably from 5.0 to 8.0 wt.-% and most preferably from 5.5 to 7.0 wt.-%;
B-3) a weight-average molecular weight (M_{w}) in the range of from 1.6 x 10⁶ to 3.0 x 10⁶ g/mol, preferably from 1.8 x 10⁶ to 2.9 x 10⁶ g/mol, more preferably from 1.9 x 10⁶ to 2.8 x 10⁶ g/mol and most preferably from 2.0 x 10⁶ to 2.5 x 10⁶ g/mol; and
B-4) a molecular weight distribution (MWD, M_{w}/Mₙ) in the range of from 2 to 10, preferably from 3 to 9, more preferably from 4 to 8 and most preferably from 6 to 7.

In these embodiments of the random copolymer of propylene and ethylene, the polypropylene (B) preferably has:
- a melt flow rate (MFR₂) (ISO 1133, 230 °C, 2.16 kg) in the range of from 0.01 to 0.30 g/10 min, more preferably from 0.01 to 0.25 g/10 min, even more preferably from 0.02 to 0.20 g/10 min and most preferably from 0.02 to 0.10 g/10 min; and/or
- a crystallization temperature (T_{c}) in the range of from 100 to 115 °C, more preferably from 102 to 110 °C and most preferably from 104 to 107 °C; and/or
- a melting temperature (Tₘ) in the range of from 135 to 160 °C, more preferably from 140 to 155 °C and most preferably from 142 to 150 °C.

The properties described herein have been found particularly advantageous for the polypropylene (B) as modifier of the recycled polyethylene-polypropylene composition (A) in the polyolefin blend according to the present invention.

Polypropylenes as described herein can be prepared by a process as described in the experimental part herein.

### Process of preparing the polyolefin blend

The present invention also relates to a process of preparing the polyolefin blend according to the present invention, wherein the recycled polyethylene-polypropylene composition (A) and the polypropylene (B) are blended in a melt-mixing device like an extruder in the optional presence of additives.

Preferably, the process comprises melting, blending, extruding and pelletizing the above-cited ingredients in a co-rotating twin screw extruder at a screw speed in the range of from 100 to 600 rpm, more preferably from 150 to 500 rpm, even more preferably from 200 to 400 rpm; and at a barrel temperature in the range of from 140 to 270 °C, preferably from 160 to 260 °C, more preferably from 170 to 250 °C and still more preferably from 180 to 240 °C.

The process according to the present invention may further comprise a sub-process of producing the polypropylene (B), wherein the polypropylene (B) is polymerized in a slurry polymerization process, preferably in a loop reactor, in the presence of propylene and, optionally ethylene, and a Ziegler-Natta catalyst. Respective polymerization processes are commonly used and described in literature.

### Article and Uses

The polyolefin blend according to the present invention may be used for the production of articles, in particular for the production of films and molded articles.

Thus, the present invention also relates to an article, preferably being a film or a molded article, comprising the polyolefin blend according to the present invention.

Further, the present invention relates to the use of the polyolefin blend according to the present invention in automotive and/or packaging applications.

Still further, the present invention relates to the use of a polypropylene (B) having
B-1) an intrinsic viscosity (IV) (CRYSTEX QC method) in the range of from 5.0 to 15.0 dl/g;
B-2) a content of soluble fraction (SF) (CRYSTEX QC method), based on the total weight of the polypropylene (B), in the range of from 1.0 to 10.0 wt.-%;
B-3) a weight-average molecular weight (Mw) (Gel Permeation Chromatography method) in the range of from 0.5 x 10⁶ to 3.0 x 10⁶ g/mol; and
B-4) a molecular weight distribution (MWD, Mw/Mn) (Gel Permeation Chromatography method) in the range of from 2 to 25
for improving the balance between stiffness and toughness of a recycled polyethylene-polypropylene composition (A) by blending both components in the optional presence of additives, wherein the recycled polyethylene-polypropylene composition (A) has
A-1) a melt flow rate MFR₂ (ISO 1133, 230 °C, 2.16 kg) in the range of from 1.0 to 20.0 g/10 min;
A-2) an ethylene (C2) content (CRYSTEX QC method), based on the total weight of the polyethylene-polypropylene composition (A), in the range of from 15 to 70 wt.-%;
A-3) an ethylene content in the crystalline fraction (C2(CF)) (CRYSTEX QC method), based on the total weight of the crystalline faction of the polyethylene-polypropylene composition (A), in the range of from 20 to 80 wt.-%;
A-4) an ethylene content in the soluble fraction (C2(SF)) (CRYSTEX QC method), based on the total weight of the soluble faction of the polyethylene-polypropylene composition (A), in the range of from 20 to 80 wt.- %;
A-5) an intrinsic viscosity of the crystalline fraction (IV(CF)) (CRYSTEX QC method) in the range of from 1.0 to 3.0 dl/g; and
A-6) an intrinsic viscosity of the soluble fraction (IV(SF)) (CRYSTEX QC method) in the range of from 0.5 to 3.5 dl/g.

In this way a polyolefin blend according to the present invention is provided.

The polyolefin blend, the recycled polyethylene-polypropylene composition (A) and the polypropylene (B) may be present with any of the features and/or in any of the embodiments described herein above.

### Examples

### Measurement methods

The following definitions of terms and determination methods apply for the above general description of the invention as well as to the below experimental part, unless otherwise defined.

### a) Melt flow rate (MFR)

Melt flow rates were measured with a load of 2.16 kg (MFR₂) at 230 °C as indicated. The melt flow rate is that quantity of polymer in grams which the test apparatus standardized to ISO 1133:2022 extrudes within 10 minutes at a temperature of 230 °C under a load of 2.16 kg.

### b) Gel Permeation Chromatography (GPC)

Molecular weight averages (M_{z}, M_{w} and Mₙ), Molecular weight distribution (MWD) and its broadness, described by polydispersity index, PDI= M_{w}/Mₙ (wherein Mₙ is the number average molecular weight and M_{w} is the weight average molecular weight) were determined by Gel Permeation Chromatography (GPC) according to I8016014-1:2003, ISO16014-2:2003, ISO16014-4:2003 and ASTM D 6474-12 using the following formulas: ${M}_{n} = \frac{{\sum }_{i = 1}^{N} {A}_{i}}{{\sum }_{i = 1}^{N} \left({A}_{i}/{M}_{i}\right)}$ ${M}_{w} = \frac{{\sum }_{i = 1}^{N} \left({A}_{i}\times {M}_{i}\right)}{{\sum }_{i = 1}^{N} {A}_{i}}$ ${M}_{z} = \frac{{\sum }_{i = 1}^{N} \left({A}_{i}\times {M}_{i}^{2}\right)}{{\sum }_{i = 1}^{N} \left({A}_{i}/{M}_{i}\right)}$

For a constant elution volume interval *ΔVᵢ*, where *Aᵢ*, and *Mᵢ* are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3x Agilent-PLgel Olexis and 1x Agilent-PLgel Olexis Guard columns was used. As the solvent and mobile phase 1,2,4-trichlorobenzene (TCB) stabilized with 250 mg/L 2,6-Di-tert-butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration (according to ISO16014-2:2003) with 19 narrow MWD polystyrene (PS) standards in the range of 0.5 kg/mol to 11500 kg/mol. The PS standards were dissolved at room temperature over several hours. The conversion of the polystyrene peak molecular weight to polyolefin molecular weights is accomplished by using the Mark Houwink equation and the following Mark Houwink constants: ${K}_{PS} = 19 \times {10}^{- 3} mL / g , {α}_{PS} = 0.655$ ${K}_{PE} = 39 \times {10}^{- 3} mL / g , {α}_{PE} = 0.725$ ${K}_{PP} = 19 \times {10}^{- 3} mL / g , {α}_{PP} = 0.725$

A third order polynomial fit was used to fit the calibration data.

All samples were prepared in the concentration range of 0.5 to 1 mg/ml and dissolved at 160 °C for 2.5 hours under continuous gentle shaking.

### c) Flexural modulus (FM)

The flexural modulus was determined in a 3-point-bending test at 23 °C according to ISO 178 on 80x10x4 mm³ test bars injection molded in line with ISO 1873-2.

### d) Impact strength (Charpy NIS)

The Charpy notched impact strength (NIS) was measured according to ISO 179-1eA at +23 °C using injection molded bar test specimens of 80x10x4 mm³ prepared in accordance with ISO 1873-2.

### e) Differential scanning calorimetry (DSC)

Differential scanning calorimetry (DSC) analysis, melting temperature (Tₘ) and melt enthalpy (Hₘ), crystallization temperature (T_{c}), and heat of crystallization (H_{c}, HCR) were measured with a TA Instrument Q200 differential scanning calorimetry (DSC) on 5 to 7 mg samples. DSC is run according to ISO11357 / part 3 /method C2 in a heat/cool/heat cycle with a scan rate of 10 °C/min in the temperature range of -30 to +225 °C. Crystallization temperature (T_{c}) and heat of crystallization (H_{c}) were determined from the cooling step, while melting temperature (Tₘ) and melt enthalpy (Hₘ) were determined from the second heating step.

Throughout the present description, the term Tₘ is understood as peak temperature of melting as determined by DSC at a heating rate of 10 K/min. Throughout the present description, the term T_{c} is understood as peak temperature of crystallization as determined by DSC at a cooling rate of 10 K/min.

### f) CRYSTEX QC analysis

The crystalline (CF) and soluble fractions (SF) of the PCR polyolefin composition as well as the ethylene content and intrinsic viscosities of the respective fractions were analyzed by use of the CRYSTEX instrument, Polymer Char (Valencia, Spain) in line with ISO 6427 Annex B. Details of the technique and the method can be found in literature (Ljiljana Jeremic, Andreas Albrecht, Martina Sandholzer & Markus Gahleitner (2020) *Rapid characterization of high-impact ethylene-propylene copolymer composition by crystallization extraction separation: comparability to standard separation methods,* International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH₃ stretching vibration (centered at app. 2960 cm⁻¹) and the CH stretching vibration (2700-3000 cm⁻¹) that are serving for the determination of the concentration and the ethylene content in ethylene-propylene copolymers. The IR4 detector is calibrated with series of 8 ethylene-propylene (EP) copolymers with known ethylene content in the range of 2 wt.-% to 69 wt.-% (determined by ¹³C-NMR) and each at various concentrations, in the range of 2 and 13 mg/ml. To encounter both features, concentration and ethylene content at the same time for various polymer concentrations expected during Crystex analyses the following calibration equations were applied: Conc = a + b*Abs(CH) + c*(Abs(CH))2 + d*Abs(CH3) + e*(Abs(CH3)2 + f*Abs(CH)*Abs(CH3) CH3/1000C = a + b*Abs(CH) + c*Abs(CH3) + d*(Abs(CH3)/Abs(CH)) + e*(Abs(CH3)/Abs(CH))2

The constants a to e for equation 1 and a to f for equation 2 were determined by using least square regression analysis.

The CH₃/1000C is converted to the ethylene content in wt.-% using following relationship: $wt . - % \left(ethylene in EP copolymers\right) = 100 - {CH}_{3} / 1000 TC * 0.3$

Intrinsic viscosity (IV) of the PCR polyolefin composition and its soluble and crystalline fractions are determined by the use of an online 2-capillary viscometer and are correlated to corresponding IV's determined by standard method in decalin according to ISO 1628-3. Calibration is achieved with various ethylene-propylene (EP) and polypropylene (PP) (co)polymers with IV = 2-4 dL/g. The determined calibration curve is linear: $IV \left(dL/g\right) = a * Vsp / c$

The samples to be analyzed are weighed out in concentrations of 10 mg/ml to 20 mg/ml. To avoid injecting possible gels and/or polymers which do not dissolve in TCB at 160 °C, like PET and PA, the weighed-out sample was packed into a stainless steel mesh MW 0.077/D 0.05 mm.

After automated filling of the vial with 1,2,4-TCB containing 250 mg/l 2,6-tert-butyl-4-methylphenol (BHT) as antioxidant, the sample is dissolved at 170 °C until complete dissolution is achieved, usually for 60 min, with constant stirring of 400 rpm. To avoid sample degradation, the polymer solution is blanketed with the N₂ atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, IV). A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt.-%] of the PP composition. During the second injection the soluble fraction (at low temperature) and the crystalline fraction (at high temperature) with the crystallization cycle are measured (wt.-% SF, wt.-% CF, wt.-% C2, wt.-% C2(SF), wt.-% C2(CF), IV(SF), IV(CF)), where the wt.-% CF is calculated in the following way: $wt . - % CF = 100 - wt . - % SF .$

### g) Fourier transform infrared spectroscopy (FTIR)

The amount of specific polymers, such as isotactic polypropylene (iPP), polyvinyl chloride (PVC), polyethylene terephthalate (PET), polystyrene (PS), and polyamide (PA), is determined by the Fourier transform infrared spectroscopy (FTIR).

All calibration samples and samples to be analyzed are prepared in similar way, on molten pressed plates.

Around 2 to 3 g of compounds to be analyzed are molten at 190 °C. Subsequently, for 20 seconds 60 to 80 bar pressure is applied in a hydraulic heating press. Next, the samples are cooled down to room temperature in 40 seconds in a cold press under the same pressure, in order to control the morphology of the compound. The thickness of the plates are controlled by metallic calibrated frame plates 2,5 cm by 2,5 cm, 100 to 200 µm thick (depending MFR from the sample); two plates are produced in parallel at the same moment and in the same conditions. The thickness of each plate is measured before any FTIR measurements; all plates are between 100 to 200 µm thick.

To control the plate surface and to avoid any interference during the measurement, all plates are pressed between two double-sided silicone release papers.

In case of powder samples or heterogeneous compounds, the pressing process would be repeated three times to increase homogeneity by pressed and cutting the sample in the same conditions as described before.

### Spectrometer:

Standard transmission FTIR spectroscope such as Bruker Vertex 70 FTIR spectrometer is used with the following set-up:
- a spectral range of 4000-400 cm-',
- an aperture of 6 mm,
- a spectral resolution of 2 cm-',
- with 16 background scans, 16 spectrum scans,
- an interferogram zero filling factor of 32
- Norton Beer strong apodisation.

Spectrum are recorded and analyzed in Bruker Opus software.

### Calibration samples:

As FTIR is a secondary method, several calibration standards were compounded to cover the targeted analysis range, typically from:
- 0.2 wt.-% to 2.5 wt.-% for PA
- 0.1 wt.-% to 5 wt.-% for PS
- 0.2 wt.-% to 2.5 wt.-% for PET
- 0.1 wt.-% to 4 wt.-% for PVC

The following commercial materials were used for the compounds: Borealis HC600TF as iPP, Borealis FB3450 as HDPE and for the targeted polymers such RAMAPET N1S (Indorama Polymer) for PET, Ultramid^{®} B36LN (BASF) for Polyamide 6, Styrolution PS 486N (Ineos) for High Impact Polystyrene (HIPS), and for PVC Inovyn PVC 263B (under powder form).

All compounds are made at small scale in a Haake kneader at a temperature below 265°C and less than 10 minutes to avoid degradation.

Additional antioxidant such as Irgafos 168 (3000 ppm) is added to minimize the degradation.

### Calibration:

The FTIR calibration principle is the same for all the components: the intensity of a specific FTIR band divided by the plate thickness is correlated to the amount of component determined by ¹H or ¹³C solution state NMR on the same plate.

Each specific FTIR absorption band is chosen due to its intensity increase with the amount of the component concentration and due to its isolation from the rest of the peaks, whatever the composition of the calibration standard and real samples.

This methodology is described in the publication from Signoret and al. "Alterations of plastic spectra in MIR and the potential impacts on identification towards recycling", Resources, conservation and Recycling journal, 2020, volume 161, article 104980.

The wavelength for each calibration band is:
- 3300 cm⁻¹ for PA,
- 1601 cm⁻¹ for PS,
- 1410 cm⁻¹ for PET,
- 615 cm⁻¹ for PVC,
- 1167 cm⁻¹ for iPP.

For each polymer component i, a linear calibration (based on linearity of Beer-Lambert law) is constructed. A typical linear correlation used for such calibrations is given below: ${x}_{i} = {A}_{i} . \frac{{E}_{i}}{d} + {B}_{i}$ where xᵢ is the fraction amount of the polymer component i (in wt.-%)

Eᵢ is the absorbance intensity of the specific band related to the polymer component i (in a.u. absorbance unit). These specific bands are, 3300 cm⁻¹ for PA, 1601 cm⁻¹ for PS, 1410 cm⁻¹ for PET, 615 cm⁻¹ for PVC, 1167 cm⁻¹ for iPP d is the thickness of the sample plate

Aᵢ and Bᵢ are two coefficients of correlation determined for each calibration curve No specific isolated band can be found for C2 rich fraction and as a consequence the C2 rich fraction is estimated indirectly, ${x}_{C 2 rich} = 100 - \left({x}_{iPP}+{x}_{PA}+{x}_{PS}+{x}_{PET}+{x}_{EVA}+{x}_{PVC}+{x}_{chalk}+{x}_{talc}\right)$

The EVA, Chalk and Talc contents are estimated "semi-quantitatively". Hence, this renders the C2 rich content "semi-quantitative".

The following bands are used to estimate the EVA, Chalk and Talc contents:
EVA: band centered at 607 cm⁻¹
Chalk : band centered at 1798 cm⁻¹
Talc: band centered at 3676 cm⁻¹

For each calibration standard, wherever available, the amount of each component is determined by either ¹H or ¹³C solution state NMR, as primary method (except for PA). The NMR measurements are performed on the exact same FTIR plates used for the construction of the FTIR calibration curves.

### h) Thermogravimetric analysis (TGA)

Thermogravimetric analysis (TGA) experiments are performed with a Perkin Elmer TGA 8000 in line with ISO 3451-1 (1997) to determine the chalk, ash and talc content. Approximately 10-20 mg of material was placed in a platinum pan. The temperature was equilibrated at 50 °C for 10 minutes, and afterwards raised to 950 °C under nitrogen at a heating rate of 20 °C/min. The weight loss between ca. 550 °C and 700 °C (WCO₂) was assigned to CO₂ evolving from CaCOs, and therefore the chalk content was evaluated as: $Chalk content = 100 / 44 \times {WCO}_{2}$

Afterwards the temperature was lowered to 300°C at a cooling rate of 20 °C/min. Then the gas was switched to oxygen, and the temperature was raised again to 900 °C. The weight loss in this step was assigned to carbon black (Wcb). Knowing the content of carbon black and chalk, the ash content excluding chalk and carbon black was calculated as: $Ash content = \left(Ash residue\right) - 56 / 44 \times {WCO}_{2} - Wcb$ where Ash residue is the wt.-% measured at 900 °C in the first step conducted under nitrogen. The ash content is estimated to be the same as the talc content for the investigated recyclates.

### i) X-ray fluorescence (XRF)

The metal amount is determined by X-ray fluorescence (XRF).

### j) Determination of the amount of paper and wood

Paper and wood amounts were determined by conventional laboratory methods including milling, floatation, microscopy and Thermogravimetric analysis (TGA).

### k) Solid phase micro-extraction (HS-SPME-GC-MS)

Limonene quantification is carried out using solid phase micro-extraction (HS-SPME-GC-MS) by standard addition.
50 mg ground samples were weighed into 20 mL headspace vials and after the addition of limonene in different concentrations and a glass-coated magnetic stir bar. The vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene were used in combination with some of the samples tested in this application. For quantification, ion 93 acquired in SIM mode was used. Enrichment of the volatile fraction was carried out by headspace solid phase micro-extraction with a 2 cm stable flex 50/30 pm DVB/Carboxen/PDMS fibre at 60 °C for 20 minutes. Desorption was carried out directly in the heated injection port of a GCMS system at 270 °C.

GCMS Parameters:
Column: 30 m HP 5 MS 0.25*0.25
Injector: Splitless with 0.75 mm SPME Liner, 270 °C
Temperature program: -10 °C (1 min)
Carrier gas: Helium 5.0, 31 cm/s linear velocity, constant flow
MS: Single quadrupole, direct interface, 280 °C interface temperature
Acquisition: SIM scan mode
Scan parameter: 20-300 amu
SIM Parameter: m/Z 93, 100 ms dwell time

Fatty acid quantification is also carried out using headspace solid phase micro extraction (HS-SPME-GC-MS) by standard addition.

50 mg ground samples were weighed in 20 mL headspace vial and after the addition of limonene in different concentrations and a glass-coated magnetic stir bar the vial was closed with a magnetic cap lined with silicone/PTFE. 10 µL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:
Column: 20 m ZB Wax plus 0.25*0.25
Injector: Split 5:1 with glass lined split liner, 250 °C
Temperature program: 40 °C (1 min) @6 °C/min to 120 °C, @15 °C to 245 °C (5 min)
Carrier: Helium 5.0, 40 cm/s linear velocity, constant flow
MS: Single quadrupole, direct interface, 220 °C inter face temperature
Acquisition: SIM scan mode
Scan parameter: 46-250 amu 6.6 scans/s
SIM Parameter: m/z 60,74, 6.6 scans/s

### Experimental part

The following materials were used for preparing the polyethylene blends:

### Recycled polyethylene-polypropylene composition

As the recycled polyethylene-polypropylene composition (rPPC), the commercially available recyclate Dipolen^{™} S-74 was used, which is a recycled polypropylene-polyethylene blend having the properties as identified in Table 1 below:

**Table 1: Properties of the recycled polyethylene-polypropylene composition.**

| **Method** | **Parameter** | **Unit** | **Value** |
|---|---|---|---|
| ISO 1133:2022 | MFR₂ | g/10min | 5.24 |
| DCS | crystallisation enthalpy | J/g | 112.0 (71.14 / 40.82) |
| | crystallisation temperature | °C | 121.9 / 115.0 |
| | heat of fusion | J/g | 113.5 (70.84 / 40.83) |
| | melting point | °C | 161.0 / 126.1 / 107.5 |
| CRYSTEX QC | C2 content | wt.-% | 46.26 |
| | C2 content (CF) | wt.-% | 46.61 |
| | C2 content (SF) | wt.-% | 46.1 |
| | intrinsic viscosity (IV) | dl/g | 1.83 |
| | intrinsic viscosity (CF) | dl/g | 1.89 |
| | intrinsic viscosity (SF) | dl/g | 1.04 |
| | SF content | wt.-% | 8.11 |

Generally, Dipolen^{™} S-74 contains the following main contaminants, the exact content varies from batch to batch but is within the following ranges:

| | |
|---|---|
| Polyamide (PA): | 0.9 to 1.4 wt.-% |
| Polystyrene (PS): | 0.8 to 2.3 wt.-% |
| Ethylen-Vinylacetat (EVA): | 0 to 1.0 wt.-% |

The ash content for Dipolen^{™} S-74 is generally from 1.3 to 2.3 wt.-%.

### Polypropylene

The following virgin polypropylenes were used in the examples:
- hPP1:: is a Ziegler-Natta-produced unimodal homopolymer of propylene having an MFR₂ of 0.24 g/10 min, and meeting the requirements B-1 to B-4.
- cPP1:: is a Ziegler-Natta-produced unimodal random copolymer of propylene and ethylene (ethylene content 2.15 wt.-%) having an MFR₂ of 0.06 g/10 min, and meeting the requirements B-1) to B-4).
- hPP2:: is a homopolymer of propylene having an MFR₂ of 2.80 g/10 min, and sold under the commercial name HC001A-B1 by the Borealis Group.
- cPP2:: is a Ziegler-Natta-produced unimodal random copolymer of propylene, and sold under the commercial name Bormed^{™} RB845MO by the Borealis Group.
- cPP3:: is a Ziegler-Natta-produced bimodal random copolymer of propylene and ethylene (ethylene content 3.4 wt.-%) having an MFR₂ of 1.80 g/10 min.

The properties of the polypropylenes are further identified in Table 2 below:

**Table 2: Properties of the polypropylenes.**

| **Method** | **Parameter** | **hPP1** | **cPP1** | **hPP2** | **cPP2** | **cPP3** |
|---|---|---|---|---|---|---|
| ISO 1133:2022 | MFR₂ (g/10min) | 0.24 | 0.06 | 2.80 | 1.90 | 1.80 |
| CRYSTEX QC | SF (wt.-%) | 2.47 | 6.14 | 3.0 | 5.5 | 5.7 |
| | C2 (wt.-%) | 0 | 2.15 | 0 | 2.9 | 3.4 |
| | IV (dl/g) | 6.59 | 10.40 | n.a. | n.a. | n.a. |
| DCS | T_{c} (°C) | 114 | 105 | 113 | 101 | 109 |
| | Tₘ (°C) | 164 | 147 | 162 | 145 | 149 |
| | Hₘ (J/g) | 101 | 72 | 101 | 81 | 94 |
| GPC | M_{z} (g/mol) | 3853333 | 4760000 | 1170000 | 1020000 | n.a. |
| | M_{w} (g/mol) | 1553333 | 2270000 | 322500 | 349500 | n.a. |
| | MWD | 22.22 | 6.68 | 6.78 | 7.26 | n.a. |

| | | | | | | |
|---|---|---|---|---|---|---|
| n.a. = not available | | | | | | |

The polypropylenes hPP1, cPP1 and cPP3 were prepared by polymerization processes at conditions as depicted in Table 3 below. The Ziegler-Natta catalyst used for hPP1 and cPP1 was Avant ZN180M, obtainable from LyondellBasell. The Ziegler-Natta catalyst use for cPP3 was the catalyst as described in the catalyst preparation example of EP 3562850. The solid catalyst component was used along with triethylaluminium (TEAL) as co-catalyst and dicyclo pentyl dimethoxy silane (D-donor) as external donor.

**Table 3: Polymerization conditions.**

| **Parameter** | **hPP1** | **cPP1** | **cPP3** |
|---|---|---|---|
| ***Prepoly reactor*** | | | |
| TEAL/C3 [g/t] | 180 | 180 | 180 |
| Donor/C3 [g/t] | 50 | 50 | 70 |
| Pressure reactor [barg] | 55 | 55 | 55 |
| Catalyst feeding rate [g/h] | 3.1 | 2.6 | 2.4 |

| ***Loop reactor*** | | | |
|---|---|---|---|
| Temperature [ °C] | 75 | 70 | 70 |
| Pressure reactor [barg] | 55 | 55 | 55 |
| H2/C3 ratio [mol/kmol] | 0.01 | 0.01 | 1.26 |
| C2/C3 ratio [mol/kmol] | 0 | 16 | 3.96 |
| C2 content [wt.-%] | 0 | 2.14 | 1.62 |
| Split [wt.-%] | 100 | 100 | 42 |
| MFR₂ (230 °C) [g/10 min] | | | 2.73 |

| ***Gas phase reactor*** | | | |
|---|---|---|---|
| Temperature [ °C] | | | 80 |
| Pressure reactor [barg] | | | 22 |
| H2/C3 ratio [mol/kmol] | | | 5.45 |
| C2/C3 ratio [mol/kmol] | | | 20.55 |
| C2 content [wt.-%] | | | 2.93 |
| Split [wt.-%] | | | 58 |
| MFR₂ (230 °C) [g/10 min] | | | 1.88 |

### Polyolefin blends

The blending of the recycled polyethylene-polypropylene composition and the virgin polypropylenes was conducted on a Coperion W&P ZSK 18-mm co-rotating, twinscrew extruder at barrel temperatures of 210 °C and screw speed of 300 rpm with a production rate of 7 kg/h. The blends contained the following additives:
Add1: Irganox^{®} 1010 (pentaerythritol tetrakis[3-[3',5'-di-tert-butyl-4-hydroxyphenyl]propionate], CAS No: 6683-19-8, commercially available from BASF SE, Germany)
Add2: Irgafos^{®} 168 (tris(2,4-ditertbutylphenyl)phosphite, CAS No: 31570-04-4, commercially available from BASF SE, Germany)

The prepared polyolefin blends and the measured properties thereof are shown in Table 4 below (IE1 to IE3).

Table 4 also included comparative examples, CE1 to CE4, wherein CE3 and CE4 are virgin polymers.

As can be seen, the inventive examples IE1 to IE3 - comprising the polyolefin blend according to the present invention - have an improved flexural modulus and an improved Charpy notched impact strength when compared to comparative example CE1 - which contains a different virgin polymer hPP2, and comparative example CE2 - in which the content of the virgin polymer hPP1 is only 1 wt.-%, and thus too low. The melt flow rate is also lower in the inventive examples IE1 to IE3 when compared to the comparative examples CE1 and CE2.

Further, the flexural modulus and impact strength of the inventive examples is comparable to or even improved over those of the virgin polymers in comparative examples CE3 and CE4.

The improved properties of the blends of the inventive examples can also be seen from the ratios of the impact strength to the flexural modulus, which are in the range of or even higher than those of the virgin polymers CE3 and CE4.

Accordingly, the blends according to the inventive examples are characterized by a good balance between stiffness and toughness.

**Table 4: Prepared blends and comparative polymers.**

| **Component** | **unit** | **CE1** | **CE2** | **IE1** | **IE2** | **IE3** | **CE3** | **CE4** |
|---|---|---|---|---|---|---|---|---|
| rPPC | wt.-% | 94.75 | 98.75 | 94.75 | 89.75 | 89.75 | | |
| Add1 | wt.-% | 0.05 | 0.05 | 0.05 | 0.05 | 0.05 | | |
| Add2 | wt.-% | 0.2 | 0.2 | 0.2 | 0.2 | 0.2 | | |
| hPP2 | wt.-% | 5 | | | | | | |
| hPP1 | wt.-% | | 1 | 5 | 10 | | | |
| cPP1 | wt.-% | | | | | 10 | | |
| cPP3 | wt.-% | | | | | | 100 | |
| cPP2 | wt.-% | | | | | | | 100 |
| MFR₂ | g/10min | 4.39 | 4.84 | 3.5 | 2.19 | 2.07 | 1.8 | 1.9 |
| Flexural modulus FM | MPa | 913 | 897 | 936 | 960 | 915 | 979 | 893 |
| Charpy notched impact strength NIS (23°C) | kJ/m² | 6.57 | 6.74 | 7.23 | 8.64 | 10.41 | 7.4 | 7.6 |
| ratio NIS/FM | kJ/m²/ MPa | 0.007196 | 0.007514 | 0.007724 | 0.009000 | 0.011377 | 0.007559 | 0.008511 |

## Claims

1. A polyolefin blend having
i) a melt flow rate MFR₂ (ISO 1133, 230 °C, 2.16 kg) in the range of from 1.0 to 20.0 g/10 min;
ii) a Charpy Notched Impact Strength (ISO 179-1eA, 23 °C) of more than 4.0 kJ/m²;
the polyolefin blend comprising
A) 80 to 98 wt.-%, based on the total weight of the polyolefin blend, of a recycled polyethylene-polypropylene composition (A), wherein the recycled polyethylene-polypropylene composition (A) has
A-1) a melt flow rate MFR₂ (ISO 1133, 230 °C, 2.16 kg) in the range of from 1.0 to 20.0 g/10 min;
A-2) an ethylene (C2) content (CRYSTEX QC method, as described in the specification), based on the total weight of the polyethylene-polypropylene composition (A), in the range of from 15 to 70 wt.- %;
A-3) an ethylene content in the crystalline fraction (C2(CF)) (CRYSTEX QC method, as described in the specification), based on the total weight of the crystalline faction of the polyethylene-polypropylene composition (A), in the range of from 20 to 80 wt.-%;
A-4) an ethylene content in the soluble fraction (C2(SF)) (CRYSTEX QC method, as described in the specification), based on the total weight of the soluble faction of the polyethylene-polypropylene composition (A), in the range of from 20 to 80 wt.-%;
A-5) an intrinsic viscosity of the crystalline fraction (IV(CF)) (CRYSTEX QC method, as described in the specification) in the range of from 1.0 to 3.0 dl/g; and
A-6) an intrinsic viscosity of the soluble fraction (IV(SF)) (CRYSTEX QC method, as described in the specification) in the range of from 0.5 to 3.5 dl/g; and
B) 2 to 20 wt.-%, based on the total weight of the polyolefin blend, of a polypropylene (B) having
B-1) an intrinsic viscosity (IV) (CRYSTEX QC method, as described in the specification) in the range of from 5.0 to 15.0 dl/g;
B-2) a content of soluble fraction (SF) (CRYSTEX QC method, as described in the specification), based on the total weight of the polypropylene (B), in the range of from 1.0 to 10.0 wt.-%;
B-3) a weight-average molecular weight (Mw) (Gel Permeation Chromatography method, as described in the specification) in the range of from 0.5 x 10⁶ to 3.0 x 10⁶ g/mol; and
B-4) a molecular weight distribution (MWD, Mw/Mn) (Gel Permeation Chromatography method, as described in the specification) in the range of from 2 to 25.

2. The polyolefin blend according to claim 1, wherein the polypropylene (B) is a homopolymer of propylene or a random copolymer of propylene and ethylene, wherein the content of comonomer units derived from ethylene (CRYSTEX QC method, as described in the specification) is in the range of from 0.1 to 10.0 wt.-% based on the total weight of the polypropylene (B).

3. The polyolefin blend according to any one of the preceding claims, wherein the polyolefin blend has
ii) a Charpy Notched Impact Strength (ISO 179-1eA, 23 °C) in the range of from 4.1 to 20.0 kJ/m².

4. The polyolefin blend according to any one of the preceding claims, wherein the polyolefin blend has
i) a melt flow rate (MFR₂) (ISO 1133, 230 °C, 2.16 kg) in the range of from 1.0 to 4.2 g/10 min; and/or
ii) a Charpy Notched Impact Strength (ISO 179-1eA, 23 °C) of more than 6.8 kJ/m², preferably in the range of from 6.9 to 20.0 kJ/m².

5. The polyolefin blend according to any one of the preceding claims, wherein the polyolefin blend has a Flexural Modulus (ISO 178, 23 °C) in the range of from 850 to 1200 MPa, preferably from 915 to 1100 MPa.

6. The polyolefin blend according to any one of the preceding claims, wherein the recycled polyethylene-polypropylene composition (A) has, based on the total weight of the recycled polyethylene-polypropylene composition (A), a content of soluble fraction (SF) (CRYSTEX QC method, as described in the specification) in the range of from 1 to 20 wt.-% and/or an intrinsic viscosity (IV) (CRYSTEX QC method, as described in the specification) in the range of from 1.0 to 3.0 dl/g.

7. The polyolefin blend according to any one of the preceding claims, wherein the polypropylene (B) is a unimodal propylene homopolymer or a unimodal random copolymer of propylene and ethylene, and it is preferably prepared using a Ziegler-Natta catalyst.

8. The polyolefin blend according to any one of the preceding claims, wherein the polypropylene (B) has a melt flow rate (MFR₂) (ISO 1133, 230 °C, 2.16 kg) in the range of from 0.01 to 1.50 g/10 min.

9. The polyolefin blend according to any one of the preceding claims, wherein the polypropylene (B) has a crystallization temperature (T_{c}) (Differential Scanning Calorimetry, as described in the specification) in the range of from 100 to 125 °C; and/or a melting temperature (Tₘ) (Differential Scanning Calorimetry method, as described in the specification) in the range of from 135 to 170 °C.

10. A process of preparing the polyolefin blend according to any one of the preceding claims, wherein the recycled polyethylene-polypropylene composition (A) and the polypropylene (B) are blended in an extruder in the optional presence of additives.

11. The process according to claim 10, wherein the polypropylene (B) is polymerized in a slurry polymerization process, preferably in a loop reactor, in the presence of propylene and optionally ethylene, and a Ziegler-Natta catalyst.

12. An article comprising the polyolefin blend according to any one of claims 1 to 9, preferably being a film or a molded article.

13. Use of the polyolefin blend according to any one of claims 1 to 9 in automotive and/or packaging applications.

14. Use of a polypropylene (B) having
B-1) an intrinsic viscosity (IV) (CRYSTEX QC method, as described in the specification) in the range of from 5.0 to 15.0 dl/g;
B-2) a content of soluble fraction (SF) (CRYSTEX QC method, as described in the specification), based on the total weight of the polypropylene (B), in the range of from 1.0 to 10.0 wt.-%;
B-3) a weight-average molecular weight (Mw) (Gel Permeation Chromatography method, as described in the specification) in the range of from 0.5 x 10⁶ to 3.0 x 10⁶ g/mol; and
B-4) a molecular weight distribution (MWD, Mw/Mn) (Gel Permeation Chromatography method, as described in the specification) in the range of from 2 to 25
for improving the balance between stiffness and toughness of a recycled polyethylene-polypropylene composition (A) by blending both components in the optional presence of additives, wherein the recycled polyethylene-polypropylene composition (A) has
A-1) a melt flow rate MFR₂ (ISO 1133, 230 °C, 2.16 kg) in the range of from 1.0 to 20.0 g/10 min;
A-2) an ethylene (C2) content (CRYSTEX QC method, as described in the specification), based on the total weight of the polyethylene-polypropylene composition (A), in the range of from 15 to 70 wt.- %;
A-3) an ethylene content in the crystalline fraction (C2(CF)) (CRYSTEX QC method, as described in the specification), based on the total weight of the crystalline faction of the polyethylene-polypropylene composition (A), in the range of from 20 to 80 wt.-%;
A-4) an ethylene content in the soluble fraction (C2(SF)) (CRYSTEX QC method, as described in the specification), based on the total weight of the soluble faction of the polyethylene-polypropylene composition (A), in the range of from 20 to 80 wt.-%;
A-5) an intrinsic viscosity of the crystalline fraction (IV(CF)) (CRYSTEX QC method, as described in the specification) in the range of from 1.0 to 3.0 dl/g; and
A-6) an intrinsic viscosity of the soluble fraction (IV(SF)) (CRYSTEX QC method, as described in the specification) in the range of from 0.5 to 3.5 dl/g.
